# EUROPÄISCHE PATENTSCHRIFT

(11) **EP 0 492 407 B1**
(45) Veröffentlichungstag und Bekanntmachung des Hinweises auf die Patenterteilung: **05.04.1995**
(21) Anmeldenummer: 91121719.8
(22) Anmeldetag: 18.12.1991
(51) Int. Cl.: D21H 23/24, D21H 21/40

(54) **Verfahren zum seitenrichtigen Aufbringen von Sicherheitselementen**
Process for the accurate positioning of security elements
Procédé d'introduction d'éléments de sécurité du bon côté

(30) Priorität: 21.12.1990 DE 4041267
(43) Veröffentlichungstag der Anmeldung: 01.07.1992
(73) Patentinhaber: GAO Gesellschaft für Automation und Organisation mbH, 81307 München (DE)
(72) Erfinder: Kaule, Wittich, Dr., W-8089 Emmering (DE)
(74) Vertreter: Klunker . Schmitt-Nilson . Hirsch

(56) Entgegenhaltungen:
- EP-A- 0 070 172
- EP-A- 0 279 880
- EP-A- 0 377 167
- EP-A- 0 486 065

## Beschreibung

Die Erfindung betrifft ein Verfahren zur Herstellung eines Wertpapiers mit eingelagertem Sicherheitselement, insbesondere Sicherheitsfaden mit Zeichen oder optisch aktiven Strukturen in Form von Hologramm-, Beugungs- oder Interferenzstrukturen sowie eine Vorrichtung zur Durchführung des Verfahrens.

Zum Schutz gegen Nachahmungen werden Wertpapiere schon seit langem mit den verschiedensten Sicherheitsmerkmalen versehen, die stets den modernsten Reproduziertechniken mit dem Ziel angepaßt sein müssen, etwaige Fälschungsversuche zu verhindern oder zumindest leicht erkennbar zu machen. Daher ging die Entwicklung der Sicherheitsmerkmale immer mehr in Richtung hochkomplizierter und herstellungstechnisch sehr aufwendiger Produkte, die durch ihr äußeres Erscheinungsbild sehr auffällig und durch die Verwendung einfacherer Methoden nicht zu imitieren sind, so daß der Aufwand für die Fälschung in keinem Verhältnis mehr zum Nutzen steht.

Eines der ältesten und bekanntesten Sicherheitsmerkmale ist der Sicherheitsfaden, welcher aus verschiedensten Materialien bestehen kann und in Form schmaler Bändchen während der Papierherstellung am Rundsieb eingefügt wird, so daß er in das Papiermaterial eingebettet ist. Vorwiegend werden die Sicherheitsfäden aus Kunststoffolien hergestellt, welche eingefärbt, metallisch beschichtet oder auch mit pigmentförmigen Substanzen versehen werden. Derartige Substanzen können den Sicherheitsfäden magnetische, fluoreszierende oder dergleichen maschinell überprüfbare Eigenschaften verleihen. Um den Sicherheitsfaden auch visuell leicht überprüfbar zu machen, werden zusätzlich auch häufig Zeichen oder Muster auf die Fäden aufgebracht.

In der EP-A-0 279 880 ist ein derartiger Sicherheitsfaden aus transparentem Folienmaterial beschrieben, der mit metallisch glänzenden Mikroschriftzeichen bedruckt und im Inneren des Sicherheitspapiers eingebettet ist. In Auflicht sind der Sicherheitsfaden und die Schriftzeichen aufgrund der Streuung der über dem Sicherheitsfaden angeordneten Papierschicht und der hohen Reflexion der glänzenden Zeichen nicht zu erkennen. Im Durchlicht dagegen zeigt sich dem Betrachter ein das Wertpapier durchziehender Schriftzug. Auf diese Weise wird verhindert, daß die Schriftzeichen durch einen Aufdruck auf die Papieroberfläche imitiert werden.

Ein besonderer, visueller Effekt kann jedoch auch durch nur teilweises Einbetten des Fadens in das Papiermaterial erreicht werden, da in diesem Fall der Sicherheitsfaden stellenweise direkt an die Oberfläche tritt (EP-A-0 070 172). Dieser sogenannte Fenster-Sicherheitsfaden kann zusätzlich zumindest teilweise mit unter UV-Bestrahlung lumineszierenden Schriftzügen oder Hologrammen versehen sein.

Einen besonders auffälligen und somit im Wertpapier sehr gut auffindbaren Sicherheitsfaden beschreibt die EP-A-0 330 733. Es handelt sich ebenfalls um einen Fenster-Sicherheitsfaden, der aus einer transparenten Kunststoffolie mit metallischer Beschichtung besteht, wobei diese Beschichtung Aussparungen in Form von Zeichen oder Mustern aufweist. Darüber hinaus ist der Sicherheitsfaden in den zu den Aussparungen deckungsgleichen Bereichen mit farbgebenden und/oder lumineszierenden Substanzen versehen, durch die sich die Zeichen oder Muster unter geeigneten Lichtbedingungen von der opaken Metallbeschichtung farblich kontrastierend unterscheiden.

Obwohl die genannten Sicherheitselemente vom sicherheitstechnischen Standpunkt her sehr wertvoll einzustufen sind, ist die Einbringung ins Papier durchaus problematisch, da in der Praxis aufgrund vieler Fehlerquellen die seitenrichtige Einbettung des Fadenmaterials nicht immer gewährleistet werden kann. Dies führt dazu, daß die eventuell vorhandenen Schriftzeichen je nach Lage des Sicherheitsfadens auch spiegelverkehrt in dem Wertpapier vorliegen können.

Bislang wurde dieser produktionsbedingte Schönheitsfehler entweder einfach akzeptiert oder durch seitigenrichtig/seitenverkehrt alternierendes Aufbringen des Druckoildes kompensiert.

Die neueren Sicherheitsfäden jedoch, die mit hochtechnischen optischen Eigenschaften, wie z. B. Hologrammen, ausgestattet sind, erfordern höhere Präzision beim Einbringen in das Papier. Denn die optisch aktive Struktur liegt nur auf einer Seite des Fadens vor und muß, um einer visuellen Prüfung zugängig zu sein, zumindest teilweise direkt an die Dokumentenoberfläche treten. Die Rückseite des Fadens ist üblicherweise mit Klebstoff beschichtet, um den dünnen und schmalen Faden, insbesondere in den Fensterbereichen, glatt und geradlinig zu befestigen.

Wird ein derartiger Faden seitenverkehrt in das Wertpapier eingebracht, so führt dies zu einem Verlust des sicherheitstechnisch wirksamen optischen Effekts, da die optische Struktur von der Rückseite des Wertpapiers her durch das Papiermaterial hindurch nicht zu beobachten ist. Da bei einem derartigen seitenverkehrt eingebrachten Sicherheitsfaden in den Fensterbereichen die Klebstoffschicht frei liegt, besteht auch die Gefahr, daß der Sicherheitsfaden in den Fensterbereichen mit anliegenden Scheinen oder Gegenständen verklebt. Seitenverkehrtes Einbetten bedeutet demnach in diesem Fall hohen Qualitätsverlust bzw. Ausschuß.

Der Erfindung liegt daher die Aufgabe zugrunde, ein Verfahren zur Herstellung eines Wertpapiers mit eingelagertem Sicherheitselement sowie eine Vorrichtung zur Durchführung des Verfahrens anzugeben, wobei das Aufbringen des Sicherheitselements derart in die Papierfertigung integriert werden soll, daß das Sicherheitselement seitenrichtig auf das Wertpapier zu liegen kommt.

Erfindungsgemäß wird diese Aufgabe durch die im Kennzeichen der Ansprüche 1 und 29 genannten Merkmale gelöst. Vorteilhafte Weiterbildungen sind Gegenstand von Unteransprüchen.

Mit dem erfindungsgemäßen Verfahren bzw. der erfindungsgemäßen Vorrichtung ist es erstmals möglich, Sicherheitsfäden gezielt seitenrichtig einzubringen. Hierfür wird das Fadenmaterial seitenrichtig auf den Vorratsrollen abgelegt und mit Hilfe eines Transportmechanismus unter möglichst konstanter Zugkraft so nahe wie möglich an das Papiersieb herangefürt, wobei der Transportmechanismus derart konzipiert ist, daß eine Verdrehung des Bandes unter Normalbedingungen unterbunden wird.

Zur Erleichterung beim ersten Einfädeln einer Endlosrolle wird der Anfang des Endlosbandes mit einer Positionierhilfe in Form eines breiteren Folienstücks versehen, welches seitenrichtig in den Transportmechanismus eingeführt wird. Das Folienstück kann perforiert sein, um eine bessere Verbindung mit dem Papier zu gewährleisten. Anstelle des Folienstücks kann auch geeignetes anderes Material, wie z. B. ein Drahtgeflecht, verwendet werden. Der Bereich der Papierbahn, der die Positionierhilfe enthält, wird anschließend als Makulatur ausgesondert.

Der Transportmechanismus ist so ausgelegt, daß er das Führungselement und somit den Faden während des gesamten Transports in seiner seitenrichtigen Lage hält. Sobald das Führungselement die entstehende Papierbahn erreicht hat, wird dieses aufgrund seines relativ hohen wasserdurchlässigen Flächenanteils schnell und gleichmäßig an der Papierbahn angelagert, wodurch eine gleichmäßige Zugkraft auf das Sicherheitselement ausgeübt wird und sich dieses folglich ebenfalls seitenrichtig an der Papierbahn anlagert.

Die erfindungsgemäße Lösung ermöglicht es somit, herkömmliche Sicherheitsfäden, die entweder vollständig oder teilweise als Fensterfäden in das Wertpapier eingebettet sind, mit höherer Qualität und mit deutlich geringerem Ausschuß einzubringen.

Dieses Verfahren eröffnet allerdings auch die Möglichkeit, Wertpapiere mit vollständig an der Oberfläche freiliegenden Sicherheitsfäden herzustellen. Derartige Sicherheitsfäden werden zunehmend zum Schutz gegen Nachahmungen mit Farbkopierern eingesetzt und sind im allgemeinen mit optisch variablen Strukturen, wie Hologrammen oder Beugungsmustern, versehen. Der Fälschungsschutz beruhrt in diesem Fall auf der ungenügenden Wiedergabe der optischen Eigenschaften solcher Fäden durch die Farbkopierer.

Bisher wurden derartige optisch variablen Sicherheitselemente jedoch wegen der Schwierigkeiten bei der seitenrichtigen Aufbringung meist nach der Wertpapierherstellung aufgebracht.

Im Zusammenhang mit der Aufbringung optisch variabler Elemente auf Wertpapiere sind verschiedene Verfahren bekannt. Sie lassen sich üblicherweise in drei Kategorien, Kleben, Transferdruck und Prägen, einteilen.

Beim Kleben werden Haftetiketten, die sich beispielsweise zunächst vorgestanzt auf Silikonpapier befinden, auf das Papiersubstrat übertragen. Die Haftetiketten weisen zumindest einen Schichtaufbau auf, der sich aus einer Haftklebeschicht, einer selbsttragenden Folie einer optisch aktiven Schicht (beispielsweise mit Beugungsgitter) und einer darüberliegenden Schutzschicht zusammensetzt. Die Dicke eines Haftetiketts liegt typischerweise in der Größe von 50 Mikrometer, wobei der wesentliche Anteil der Dicke auf die Trägerfolie entfällt.

Beim Transferdruck, auch Heißprägen genannt, wird das optisch variable Element auf einem Transferband vorgefertigt und in einem nachfolgenden Arbeitsschritt auf das Substrat übertragen. Der auf das Papier übertragene Aufbau besitzt typischerweise eine Dicke im Bereich von wenigen Mikrometern. Im Falle von Hologrammen besteht der übliche Schichtaufbau des Elements aus einer Heißklebeschicht, aus einer Lackschicht mit Prägung, einer Aluminium-Aufdampfschicht und einer transparenten abdeckenden Schutzschicht. Dieser Schichtaufbau befindet sich zunächst auf der Transferfolie, wobei er mit einer Releaseschicht (z. B. einer Wachsschicht) auf der Folie befestigt ist. Zum Transfer wird das Band mit der Heißklebeschicht auf das Substrat aufgelegt, durch Anpressen eines geheizten Stempels wird die Heißklebeschicht aktiviert, so daß sich das Element mit dem Substrat verbindet. Gleichzeitig schmilzt die Trennschicht, wodurch sich das Hologramm vom Transferband löst. Das Transferprinzip ist heute das am häufigsten angewandte Verfahren und wird insbesondere auch üblicherweise zum Aufbringen von Hologrammen auf Kunststoff-Kreditkarten verwendet.

Das Prägeverfahren eignet sich vor allem für Beugungselemente, wie Hologramme und optische Gitter. Hierbei wird auf ein Substrat eine Schicht aus einem aushärtbaren Lack aufgetragen, der vorzugsweise mit einer extrem dünnen und reflektierenden Metalloberfläche versehen ist. Mit einem Prägestempel wird in die Lackschicht die beugungsoptische Reliefstruktur eingeprägt, nach dem Aushärten des Lacks wird die Struktur mit einem Schutzlack abgedeckt. Das fertige Element weist einen Schichtaufbau auf, der aus den aufeinanderfolgenden Schichten von Lack mit Metallschicht und Reliefstruktur sowie der Schutzlackschicht besteht.

Jedes der bekannten Verfahren und die damit hergestellten Produkte haben ihre speziellen Vor- und Nachteile. Klebeetiketten beispielsweise sind technisch einfach herstellbar und problemlos seitenrichtig auf die vorgesehenen Substrate übertragbar. Extrem nachteilig für eine Anwendung auf dem Wertpapiersektor ist bei Klebeetiketten allerdings die Möglichkeit, die Elemente als Ganzes vom Substrat zu lösen und auf gefälschte Produkte zu übertragen. Aus diesem Grund werden für Wertpapieranwendungen die Transfer- und Prägeelemente bevorzugt.

Die Transfer- und Prägeelemente genügen weitgehend dem auf dem Wertpapiersektor geforderten Bedürfnissen an Fälschungssicherheit, jedoch stellen sich bei der Fertigung von Wertpapieren mit diesen Elementen eine Reihe von fertigungstechnischen Problemen.

Es ist zu berücksichtigen, daß Wertpapiere üblicherweise ein sicherheitstechnisch hochwertiges Druckbild besitzen, diese Druckbilder werden in den meisten Fällen mit Hilfe von Stahltiefdruckverfahren aufgebracht. Stahltiefdruck und verwandte Verfahren erfordern, damit sich die Druckfarben gut mit dem Substrat verbinden, eine relativ hohe Oberflächenrauhigkeit des Substrats. Rauhe Oberflächen sind jedoch für die Aufbringung der wenig stabilen optisch variablen Elemente denkbar ungeeignet. Die empfindlichen Hologrammstrukturen werden nämlich durch rauhe Oberflächenstrukturen in ihrer Qualität sehr negativ beeinflußt.

Weiterhin ist zu beachten, daß das Wertpapier beim Stahltiefdruck auf seiner ganzen Fläche einer sehr hohen Druckbelastung ausgesetzt wird. Eventuell vor dem Druck aufgebrachte optische Elemente werden hierdurch gewöhnlich in ihrer optischen Wirkung herabgesetzt und können durch die sich vom Papieruntergrund durchprägende Papierrauhigkeit sogar beschädigt oder völlig zerstört werden.

Bei der Herstellung von Wertpapieren mit optisch variablen Elementen stattet man aufgrund dieser Problematik das Wertpapier entweder zuerst mit dem Druckbild aus und bringt das Hologramm in einem der darauffolgenden Arbeitsschritte auf oder man zerlegt die Aufbringung der Elemente in Einzelschritte, wobei die durch das Stahltiefdruckverfahren nicht gefährdete Maßnahmen vor dem Bedrucken und die anderen erst nach dem Druckvorgang vorgesehen wurden. Bei einer solchen Vorgehensweise nahm man bisher bewußt in Kauf, daß durch die direkte Verkopplung mit dem Druckvorgang einerseits keine auftragsneutrale Vorfertigung von unbedruckten Wertpapieren mit optisch variablen Elementen möglich war (keine Produktion auf Halde) und man andererseits für die Aufbringung der optisch variablen Elemente pro Drucklinie spezielle dafür geeignete Maschinen (Transfermaschinen etc.) benötigt. Die pro Drucklinie benötigten Spezialmaschinen erhöhen nicht nur die Kosten und den Raumbedarf für den Maschinenpark, sondern bilden aufgrund der abweichenden Produktionskapazität am Ende der Drucklinie jeweils einen Engpaß, der nur mit erhöhtem zusätzlichen Maschinenaufwand ausgeglichen werden kann.

Aus der EP-A-0 338 378 ist ein derartiges System zur Fertigung von Papierprodukten bekannt, die sowohl ein Druckbild wie ein optisches Beugungselement aufweisen. In einem kontinuierlichen Prozeß wird das Papier zunächst in bekannten Druckwerken bedruckt. Anschließend wird analog zum beschriebenen Prägeverfahren in einem Arbeitsgang ein strahlungshärtbarer Lack aufgetragen und mit einer Beugungsstruktur versehen. In nachfolgenden Arbeitsgängen wird die Beugungsstruktur mit einer reflektierenden Metallschicht bedampft und mit einem Schutzlack versehen.

In anderen bekannten Systemen wird der Arbeitsgang der Hologrammaufbringung zweigeteilt. Im Anschluß an die Papierherstellung wird dabei in einem ersten Teilschritt der Lack auf die Papieroberfläche aufgetragen. Nach dem Bedrucken des Papiers wird im nächsten Teilschritt das optische Gitter eingeprägt.

Die erzwungene Reihenfolge von Bedrucken und Aufbringen der optisch wirksamen Schichten bzw. das Aufbringen der optisch wirksamen Strukturen führt, wie bereits angedeutet, zu einer Reihe von schwerwiegenden Nachteilen.

Ein weiterer Nachteil der bekannten Verfahren ist ihre schwierige Eingliederung in den Organisationsablauf von Wertpapierdruckereien. Aus sicherheitstechnischen Gründen ist es bei der Wertpapierherstellung praktisch unumgänglich, daß der Druckvorgang, insbesondere das Drucken der Seriennummer, den letzten Verarbeitungsvorgang vor der Auslieferung der Wertpapiere darstellt. In Wertpapierdruckereien ist es deshalb feste Gepflogenheit, Papier mit den zugehörigen Sicherheitsmerkmalen wie Wasserzeichen, Sicherheitsfaden und eventuellen optischen Elementen vorzufertigen und anschließend zu bedrucken. Die Beibehaltung dieser Fertigungsfolge ist dabei bei den bekannten Verfahren ebenfalls nicht möglich.

Des weiteren ist zu beachten, daß optisch variable Elemente und Papier zwei Materialien mit höchst unterschiedlichen Eigenschaften sind und daß entsprechend der vorgesehenen Funktion auch verschiedene Anforderungen an die beiden Materialien gestellt werden. Papier, insbesondere Wertpapier, hat neben anderen Eigenschaften eine gewisse "Griffigkeit" aufzuweisen, weiter muß das Papier Druckfarben annehmen und binden können. Diese Eigenschaften erreicht man durch Wahl spezieller Papierarten, vorzugsweise Hadernpapier sowie durch Einstellung einer vorbestimmten Oberflächenrauhigkeit und -struktur. Optisch variable Elemente haben demgegenüber optische Eigenschaften mit möglichst hohem Wirkungsgrad aufzuweisen. Die physikalischen Gesetze erfordern hierfür aber in erster Linie Oberflächenstrukturen, die sich durch eine sehr glatte und ebene Oberfläche auszeichnen.

Beim Aufbringen der optischen Elemente auf Papier besteht daher stets die Gefahr, daß sich die Oberflächenrauhigkeit des Papiers in die zum Teil sehr empfindlichen Schichten des Flächenelements einprägen und diese somit beschädigen, beeinträchtigen oder gar zerstören. Im Regelfall ist deshalb ein Ausgleich zwischen den unterschiedlichen Oberflächengualitäten notwendig, der eine derartige Beeinträchtigung verhindert.

Diese Vielzahl von teils sehr gravierenden Nachteilen vermeiden das erfindungsgemäße Verfahren und die zugehörige Vorrichtung. Mit Hilfe der Erfindung ist es möglich, ein Wertpapier mit optisch variablem Element zu schaffen, welches nachträglich, insbesondere im Stahltiefdruckverfahren, bedruckt werden kann, ohne daß dadurch das optisch variable Element beschädigt wird. Darüber hinaus kann die Aufbringung des optisch variablen Elements ohne maschinelle Veränderungen in den Fertigungsablauf integriert werden.

Im Gegensatz zur bisherigen Vorgehensweise, bei welcher die optisch variablen Elemente immer erst nach der eigentlichen Herstellung auf das Wertpapier aufgeprägt, aufgeklebt oder übertragen wurden, gibt die Erfindung die Lehre, das optisch variable Element bereits während der Papierherstellung mit dem Wertpapier zu verbinden und zwar in dem Zustand, in dem das Wertpapier noch relativ feucht, weich und noch nicht gegautscht oder kalandriert ist. Im Gegensatz zum getrockneten und ausgehärteten Zustand des Papiers ist es in dieser Phase möglich, auch ein druckempfindliches optisch variables Element in die Papiermasse hineinzudrücken, ohne daß es dabei zu irgendwelchen Beschädigungen kommt. Der noch hohe Wassergehalt in dieser Phase der Herstellung wirkt druckausgleichend und ermöglicht eine gleichmäßige Einbettung der Trägerfolie in die Papiermasse.

Anders als beim nachträglichen Aufbringen der optisch variablen Elemente prägt die Oberflächenrauhigkeit des Papiers nicht die Trägerfolie, sondern es kommt umgekehrt zu einer Anpassung der noch nachgiebigen Papierfasern an die glatte Unterfläche der Trägerfolien, die auf ihrer anderen Seite durch die glatten Oberflächen der Kalanderwalzen gestützt werden.

Im Ergebnis erreicht man dadurch eine Einbettung des optisch variablen Elements in die Papiersubstanz, wobei die Papieroberfläche mit der Oberfläche des optisch variablen Elements fluchtet. Ein nachträgliches Bedrucken auch in den Bereichen des optisch variablen Elements ist ohne weiteres möglich, da die auftretenden hohen Drücke nicht zu einer übermäßigen Belastung des in die Oberfläche des Wertpapiers eingelassenen optisch variablen Elements führen.

Besonders vorteilhaft für die Durchführung des erfindungsgemäßen Verfahrens ist es, wenn die optisch variablen Elemente in Bandform, ähnlich den Sicherheitsfäden, vorliegen. Anders als die herkömmlichen Sicherheitsfäden werden die Trägerfolien mit der optisch aktiven Struktur auf die gebildete Papierschicht aufgelegt, nachdem die Blattbildung abgeschlossen oder nahezu abgeschlossen ist. In diesem Sinne wird die Folie entweder außerhalb der Pulpe an das Rundsieb herangeführt, nachdem sich die Papierschicht vollständig gebildet hat, d. h. sie werden nach Verlassen des Rundsiebs auf die Papierfaserschicht aufgelegt oder die Folie wird in der Pulpe an einem Punkt an das Rundsieb herangeführt, an dem ein wesentlicher Teil der Papierbildung bereits abgeschlossen ist, z. B. nachdem 80 bis 90 % der endgültigen Papierdicke vorliegen, so daß die Materialdicke von Folienstreifen plus Papier etwa der Papierdicke in den nebenliegenden Bereichen entspricht.

Im Gegensatz hierzu ist der Punkt der Fadenzuführung bei herkömmlichen Sicherheitsfäden aufgrund ihrer, im Vergleich zu optisch variablen Elementen, geringen Anforderungen an das Papiermaterial und die Behandlung freier wählbar. So können derartige Sicherheitsfäden, die bekanntlich zumindest teilweise im Inneren des Papiermaterials angeordnet sind, z. B. bereits nach 50 % Papieranlagerung, an das Rundsieb herangeführt werden. Der Einbringpunkt kann jedoch ebenso bei 40 oder 60 % Papierbildung gewählt werden, ohne daß die Erfassung der sicherheitstechnisch wirksamen physikalischen Effekte beeinträchtigt wird.

Die an die Papierbahnbildung anschließenden Verfahrensschritte, wie z. B. das Kalandrieren, Leimen, Trocknen etc., entsprechen dem üblichen Vorgehen. Durch sie wird die Trägerfolie fest in dem Wertpapier verankert. Vorzugsweise ist die papierseitige Schicht der Trägerfolie mit einer Kleberschicht zu versehen, die beim Trocknen des Papiers aushärtet. Je nach Ausführungsform, d. h. Folienbreite, Steifigkeit, Aufbringzeitpunkt etc. wählt der Fachmann aus der im Handel verfügbaren Palette von Klebstoffen den jeweils geeigneten aus. Besonders geeignet erscheinen dabei sowohl Haftkleber, als auch wasserlösliche Kleber oder auch Heißschmelzkleber. Gegebenenfalls ist es auch möglich, die Kleber-Aushärtung durch eine entsprechende UV- oder Infrarotbestrahlung zu unterstützen.

Für den Fall, daß kein endloses Folienband eingesetzt werden soll, können auch einzelne optisch variable Elemente in Form von Haftetiketten vorgesehen sein. Diese Haftetiketten werden vorzugsweise an einem endlosen Transferband befestigt, das später, d. h. nach Verankerung der Etiketten, in der Papiermasse wieder abgezogen wird.

Da sich die Hologramm-Aufbringung nach dem erfindungsgemäßen Verfahren noch im Rollenstadium des Papiers durchführen läßt, sind hohe Verarbeitungsgeschwindigkeiten möglich.

Aus der Unabhängigkeit von Druckprozeß und Hologramm-Aufbringung ergibt sich als weiterer Vorteil, daß der in den Wertpapierdruckereien übliche Verfahrensablauf eingehalten werden kann. So kann das Papier mit all seinen Sicherheitselementen wie Wasserzeichen, Sicherheitsfaden, optisch variablem Element usw. vorgefertigt und soweit nötig auch gelagert werden. Der besonders sicherheitskritische Druckvorgang stellt wie üblich den letzten Verfahrensschritt dar.

Nachfolgend sind Ausführungsformen der Erfindung anhand der beigefügten Zeichnung beispielsweise beschrieben. Darin zeigen:
- Fig. 1: einen Querschnitt durch ein Wertpapier mit eingelassenem Hologrammelement und eingebettetem Sicherheitsfaden,
- Fig. 2a - d: verschiedene Ausführungsformen der Positionierhilfe und des Führungselements,
- Fig. 3 - 13: schematische Darstellungen einer Rundsiebpapiermaschine zur erfindungsgemäßen Aufbringung der Sicherheitselemente.

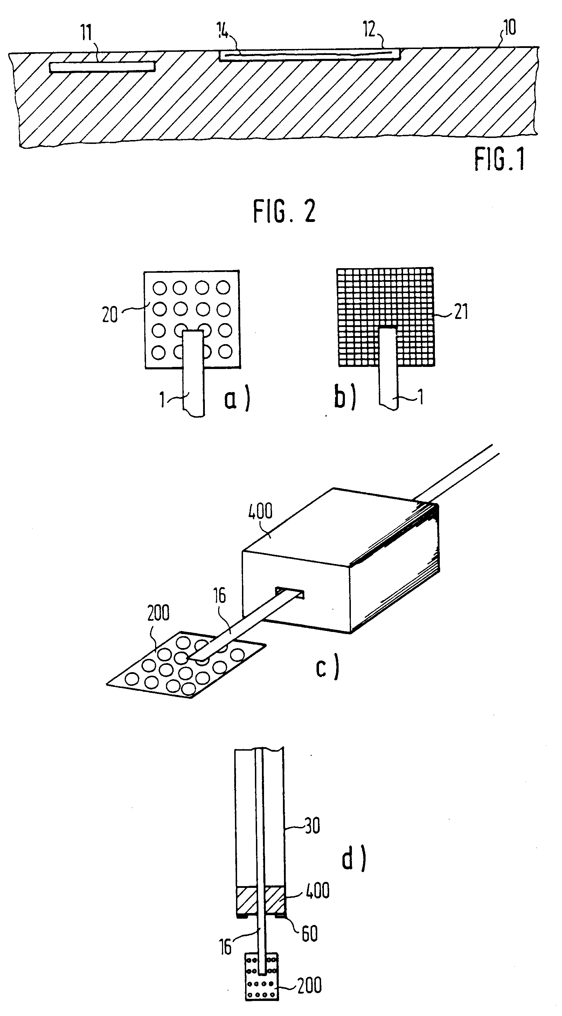

Fig. 1 zeigt einen Ausschnitt aus einem Wertpapier 10 mit eingelagerten Sicherheitselementen, vorzugsweise einem optisch variablen Element 12 und einem Sicherheitsfaden 11. Das Wertpapier kann natürlich auch nur eines der gezeigten Sicherheitselemente 11, 12 aufweisen oder eine beliebige Kombination aus diesen Sicherheitselementen und anderen nicht gezeigten Sicherheitselementen.

Das optisch variable Element 12 ist in Form eines Streifens fugenlos in die Papiermasse eingebettet, wobei seine Oberfläche mit der Papieroberfläche fluchtet. Die Oberfläche des optisch variablen Elements, das vorzugsweise eine Hologrammstruktur 14 aufweist, ist von außen ganzflächig sichtbar, so daß die optischen Effekte gut überprüfbar sind, was bei den bekannten Fenster-Sicherheitsfäden nicht immer der Fall ist, da dort die winzigen Flächen, die das Fadenmaterial sichtbar machen, optisch nicht sehr wirksam sind.

Der Sicherheitsfaden 11 dagegen kann entweder vollständig in das Papiermaterial eingebettet oder in Form eines Fenster-Sicherheitsfadens in die Papiermasse eingewebt sein. In einer bevorzugten Ausführungsform besteht der Sicherheitsfaden 11 aus einer Kunststofffolie, die metallisch beschichtet ist, wobei die Beschichtung Aussparungen in Form von Zeichen oder Mustern aufweist. Darüber hinaus ist der Sicherheitsfaden in Form eines Fenster-Sicherheitsfadens in das Papiermaterial eingebettet.

Sowohl das optisch variable Element als auch der Sicherheitsfaden liegen als dünnes, selbsttragendes Endlosband auf einer Vorratsrolle vor. Daher wird im folgenden das einzubringende Folienband allgemein als Sicherheitselement bezeichnet. Welche der dargestellten Möglichkeiten für das jeweilige einzubringende Sicherheitselement am geeignesten ist, entscheidet der Fachmann im Hinblick auf die tatsächlichen Gegebenheiten.

Um das Sicherheitselement seitenrichtig an der sich bildenden Papierbahn anlagern zu können, ist der Anfang des Endlosbandes mit einem perforierten Folienstück 20 als Positionierhilfe versehen, wie in Fig. 2a skizziert. Anstelle des Folienstücks 20 kann jedoch auch jede andere Art von Geflecht, das gut wasserdurchlässig ist, verwendet werden, wie z. B. das Drahtgeflecht 21 in Fig. 2b.

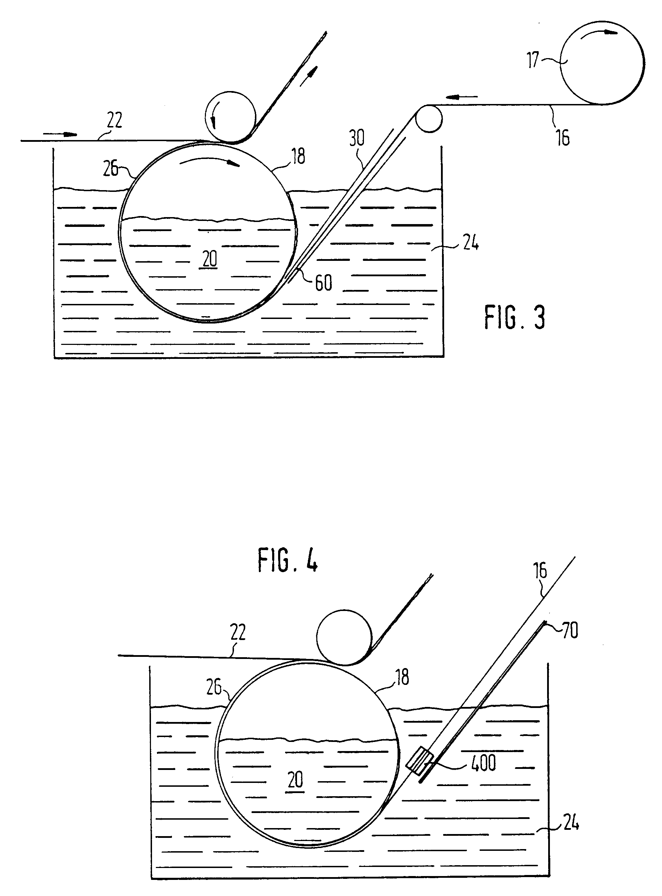

Die genaue Funktion und Einsatzweise der Positionierhilfe 20 bzw. 21 wird anhand der folgenden Fig. ausführlich erläutert. Dabei zeigen die Fig. 3 - 10 verschiedene Möglichkeiten, wie das Folienband 16 innerhalb der Papiermaschine zugeführt werden kann.

Wie aus Fig. 3 ersichtlich, erfolgt die Bildung der Papierschicht auf dem Rundsieb 18 in bekannter Art und Weise, indem Flüssigkeit aus der Pulpe 24 durch das Innere 20 des Rundsieb 18 abgezogen wird, wobei sich die Papierfasern auf dem Rundsieb ablagern.

Das Sicherheitselement 16 wird dabei von einer Vorratsrolle 17 abgezogen und mit einer Düse 30 auf das Papier 26 aufgebracht, wobei die Düse 30 so weit in die Pulpe 24 eintaucht, daß eine Stelle erreicht wird, an welcher dem jeweiligen Sicherheitselement 16 entsprechend genügend Papier gebildet ist. Beim Verlassen des Rundsiebs 18 wird die fertige Papierbahn 26 mit einem Abnahmefilz 22 abgedeckt und zu den nachfolgenden Weiterverarbeitungsstationen transportiert.

Um auch innerhalb der Düse 30 eine seitenrichtige Positionierung des Sicherheitselements zu gewährleisten, ist es von Vorteil, den Anfang des Endlosbandes mit einem zusätzlichen räumlichen Führungselement 400 zu versehen, das in seinen Dimensionen an die Abmaße der Düse angepaßt ist (Fig. 2c). Da die Düse 30 vorzugsweise einen rechteckigen oder ovalen Querschnitt aufweist, ist das Führungselement 400 in der Regel entweder quaderförmig, wie in Fig. 2c dargestellt oder zylindrisch geformt. Es sind jedoch auch andere Ausführungsformen denkbar, die es dem Führungselement erlauben, in der Düse zu gleiten, ohne daß es verdrehen kann. Dieses Führungselement 400 ist jedoch nicht am Sicherheitselement 16 befestigt, umschließt es allerdings derart, daß sich das Band 16 zwar in Laufrichtung ungehindert bewegen kann, jedoch in keiner anderen Richtung.

Beim Einsetzen einer neuen Vorratsrolle werden zu Beginn das perforierte Folienstück 200 und das Führungselement 400 seitenrichtig in die Düse 30 eingebracht und mit Preßluft an das dem Papier nahe Düsenende transportiert. Während sich das Folienstück 200 seitenrichtig auf der Papierbahn anlagert, wird das Führungselement 400 an einem Paßstück 60 am Düsenende arretiert. Fig. 2d zeigt in einer Schnittdarstellung diese Anordnung.

Das Folienstück 200 wird wegen seiner relativ hohen Wasserdurchlässigkeit sehr schnell und gleichmäßig in die Papierbahn eingebettet, so daß auf das Sicherheitselement 16 eine relativ gleichmäßige Zugkraft ausgeübt wird. Auf diese Weise ist gewährleistet, daß sich das Band 16 weder beim erstmaligen Einfädeln des Endlosbandes, noch im kontinuierlichen Betrieb verdrehen kann.

Statt der Düse 30 kann auch eine Befestigungsstange 70 verwendet werden, an deren dem Rundsieb zugewandten Seite das Führungselement 400 befestigt ist, wie in Fig. 4 dargestellt.

Nach dem die Vorratsrolle vollständig abgespult worden ist, kann das Führungselement 400 über einen speziellen Klappmechanismus am Paßstück der Düse freigegeben werden und lagert sich folglich am Boden des Pulpebades ab. Die sich im Laufe der Zeit am Badboden ansammelnden Führungselemente 400 werden bei den routinemäßigen Säuberungsaktionen des Bades entfernt. Wahlweise kann das Führungselement 400 auch mit Hilfe einer speziellen Vorrichtung nach oben aus der Düse herausgezogen und somit die Düse für das Führungselement der nächsten Vorratsrolle freigemacht werden.

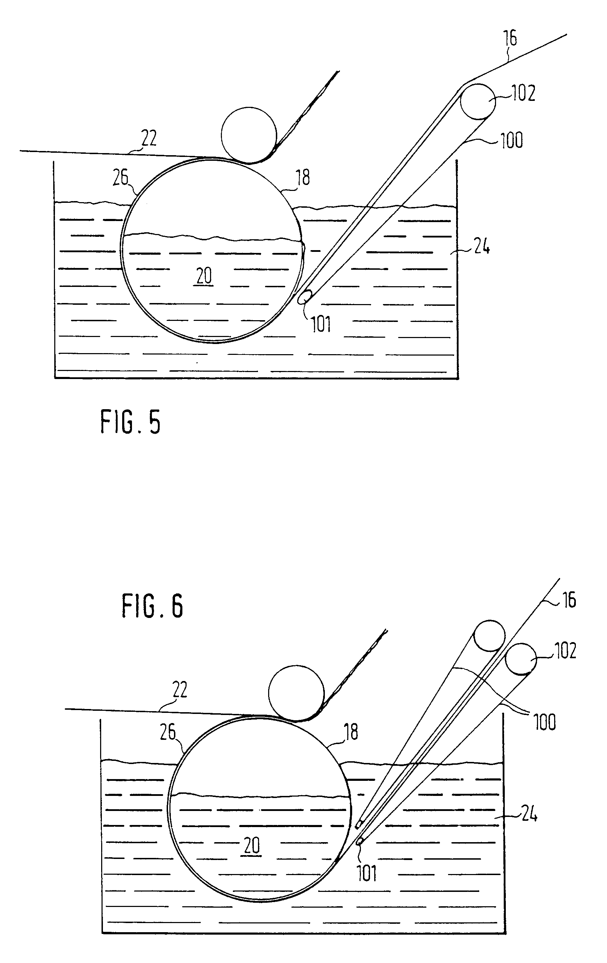

Fig. 5 zeigt ein völlig anderes Verfahren, das Sicherheitselement 16 seitenrichtig an die Papierbahn heranzuführen. Hier wird das Sicherheitselement über ein Transportband 100, das in sich geschlossen über die Rollen 101 und 102 umläuft, an die sich bildende Papierbahn gebracht. Um den Übergang des Folienstücks am Fadenanfang 200 vom Transportband 100 auf die Papierbahn zu gewährleisten, ist das Folienstück 200 so steif und die Umlenkung des Transportbandes 100 an der Rolle 101 so scharf, daß nur ein Ablösen an der Umlenkrolle, jedoch kein Weitertransport möglich ist. Ferner muß das Transportband 100 so gestaltet sein, daß das Folienstück 200 während des Transports fest am Transportband 100 haftet und dennoch leicht ablösbar ist. Dies kann z. B. dadurch erreicht werden, daß sowohl das Transportband 100 als auch das Folienstück 200 mit magnetischen Einlagerungen versehen werden oder daß das Folienstück 200 mit einem Haftkleber beschichtet wird.

Eine dritte Möglichkeit des seitenrichtigen Transports ist in Fig. 6 dargestellt. In diesem Fall wird das Folienstück 200 und der damit verbundene Faden 16 zwischen zwei Transportbändern, die im Aufbau zu dem in Fig. 5 gezeigten identisch sind, an das Rundsieb transportiert.

Wenn das Sicherheitselement 16 genügend breit ist oder wenn das Papier im wesentlichen die endgültige Dicke erreicht hat, lagert sich vor dem Sicherheitselement 16 kein Papier mehr ab, da die Folie in ihrem Auflagebereich die Wasserdurchlässigkeit von Papier und Sieb unterbindet. Das Sicherheitselement 16 kann z. B. mit einem Heißkleber beschichtet sein. In der heißen Trockenpartie der Papiermaschine wird sie dann fest mit dem Papier verbunden. Klebstoffbeschichtungen sind z. B. bei Fenster-Sicherheitsfäden notwendig, da andernfalls der Sicherheitsfaden in den Fensterbereichen nicht glatt auf der darunterliegenden Papierschicht aufliegen würde.

Nachteilig ist, daß der Klebstoff (wie z. B. Heißkleber) bei der Einbringung zunächst nur minimale Klebkraft haben darf, da sonst die Folie 16 in der Einbringdüse 30 festkleben würde. Nachdem das Sicherheitselement 16 mit Hilfe des Folienstücks 200 an die Papierbahn angelagert wurde, wird das Endlosband 16 zunächst nur mit der "Eigenklebekraft" des feuchten Papiers 26, d. h. per Adhäsion, festgehalten. Für breitere, dickere und steifere Folien mit einem Breiten : Dicken-Verhältnis von etwa 20 und mehr, wie sie heute häufig verwendet werden, sind deshalb die im folgenden beschriebenen Verfahren besser geeignet.

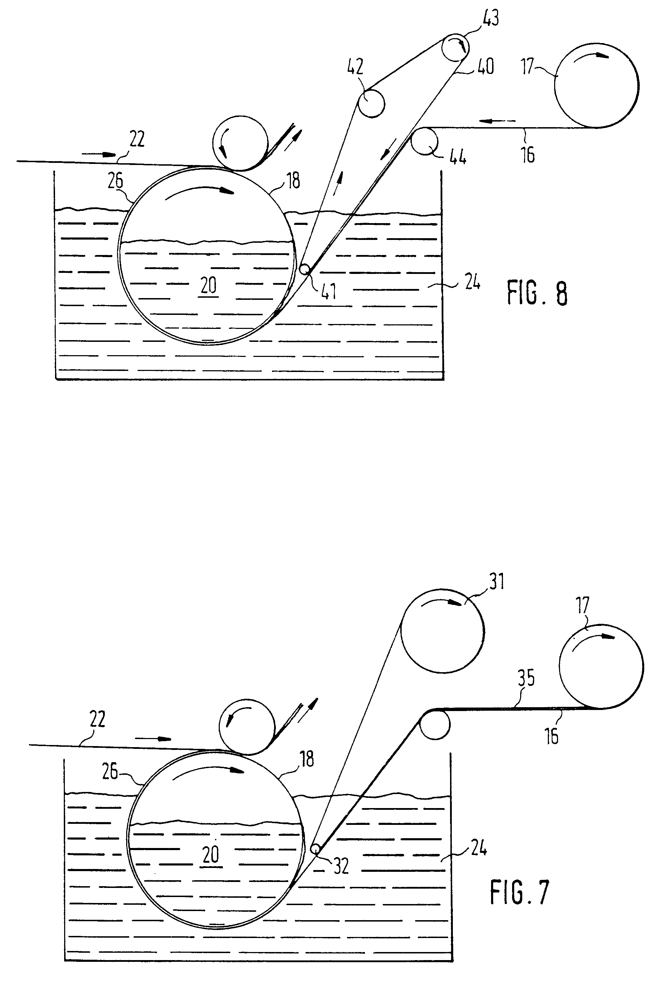

In Fig. 7 ist ein Verfahren dargestellt, welches das Auflegen eines Sicherheitselements 16 ermöglicht, das mit einem starken Haftkleber beschichtet und, wie in solchen Fällen üblich, mit einem die beschichtete Seite schützenden Silikonpapier 35 versehen ist. Diese Doppelfolie aus Sicherheitselement 16 und Silikonpapier 35 wird, wie bisher, von einer Vorratsrolle 17 abgezogen und über Umlenkrollen an das Rundsieb 18 herangeführt. An der gleichen Stelle befindet sich die Abziehvorrichtung 32 für das Silikonpapier 35, die im wesentlichen aus einer Umlenkrolle besteht, die das abgezogene Silikonpapier einer Speicherrolle 31 zuführt.

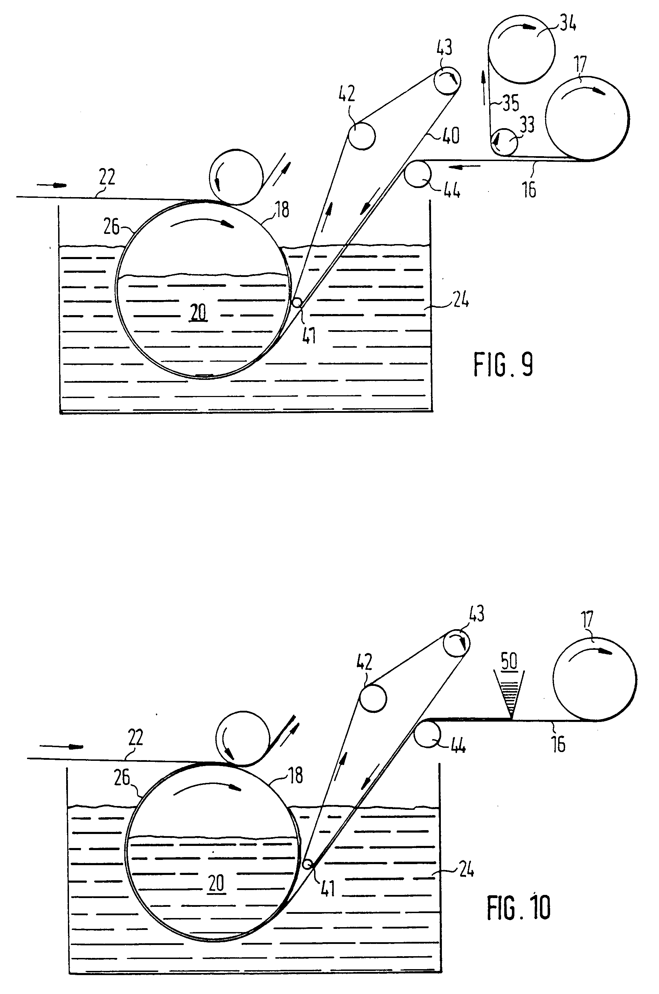

Bei der Verwendung von schwächeren Haftklebern, ähnlich wie Tesafilm, genügt es, die mit Klebstoff beschichtete Seite der Folie 16 während der Zuführung zum Rundsieb 18 abzudecken, so daß sich in diesem Fall nur die Merkmalsfolie 16 auf der spenderrolle 17 befindet. Fig. 8 zeigt ein derartiges verfahren, bei dem als schützende Abdeckung ein in sich geschlossenes silikonbeschichtetes Trägerband 40 benutzt wird. Dieses Band durchläuft eine durch die Umlenkrollen 41 - 43 definierte Strecke, wobei es im Bereich zwischen den Umlenkrollen 44 und 41 die klebende Oberseite der Merkmalsfolie 16 abdeckt. Auf diese Weise wird verhindert, daß sich Papierfasern oder andere in der Pulpe enthaltene Substanzen auf der Klebstoffbeschichtung absetzen und dadurch die Haftung auf dem nassen Blattmaterial beeinträchtigen. Die in den Fig. 7 und 8 dargestellten Verfahren können, wie in Fig. 9 gezeigt, kombiniert werden, um das Einfädeln einer haftkleberbeschichteten Merkmalsfolie 16 mit Silikonpapier 35 zu erleichtern. Hier wird das Silikonpapier 35 direkt nach der Spenderrolle 17 über die Umlenkrolle 33 von der Folie 16 abgezogen und einer Speicherrolle 34 zugeführt. Die nun freiliegende Klebstoffbeschichtung der Folie 16 wird während des weiteren Transports zu der nassen Papierbahn durch eine umlaufende silikonbeschichtete Folie 40 geschützt, ganz analog zum oben beschriebenen Verfahren.

Eine weitere Alternative zu den bisher genannten Verfahren zum Einbringen von haftkleberbeschichteten Merkmalsfolien bietet das in Fig. 10 gezeigte Vorgehen. Das Sicherheitselement 16 wird in diesem Fall unmittelbar vor der Einbringung in die Papiermaschine mit Klebstoff 50 beschichtet und nach dem bekannten Verfahren mit Hilfe eines umlaufenden Silikonbandes 40 zum Rundsieb transportiert.

Hinsichtlich der verwendbaren Klebstoffe ist zu bemerken, daß neben Heiß- und Haftklebern auch andere Klebstoffe, wie z. B. Mehrkomponentenkleber, oder Klebstoffe, die in Wasser aktiviert werden, verwendet werden können. Vorteilhaft ist auch die Verwendung von Klebstoffmischungen, bei denen die Folien zunächst angeheftet und bei späteren Produktionsschritten (z. B. beim Trocknen und Kalandrieren unter Wärmeeinfluß) fest mit dem Papier verbunden wird.

Für den Fall, daß das Sicherheitselement vollflächig an der Oberfläche des Wertpapiers sichtbar sein soll, gibt es noch weitere Verfahrensvarianten, um das Sicherheitselement seitenrichtig auf das Wertpapier während seiner Herstellung aufzubringen.

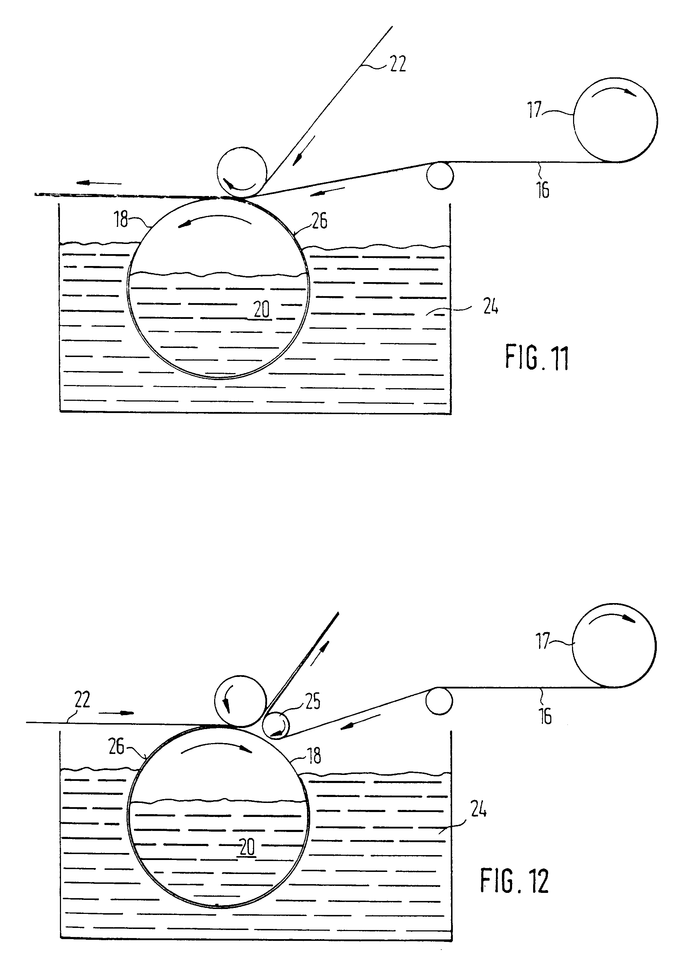

Hierbei wird das Band 16, wie in Fig. 11 angedeutet, der Papiermaschine so zugeführt, daß es auf der bereits gebildeten Papierfaserschicht 26 aufliegt. Dabei wird das Band 16 zwischen dem Abnahmefilz 22 und die das Rundsieb 18 verlassende Papierfaserschicht 26 eingeführt. Die Folie 16 wird von einer Vorratsrolle 17 abgezogen.

Durch die Einführung des Sicherheitselements 16 zwischen Filz 22 und Papierschicht 26 wird eine besonders gute Führung und genaue Plazierung des Sicherheitselements 16 möglich. Die Folie kann aber auch, wie in Fig. 12 gezeigt, auf der anderen Seite der Papierschicht 26 aufgelegt werden, also beispielsweise in den Spalt zwischen den Rollen 25 und der Papierschicht 26 eingeführt werden.

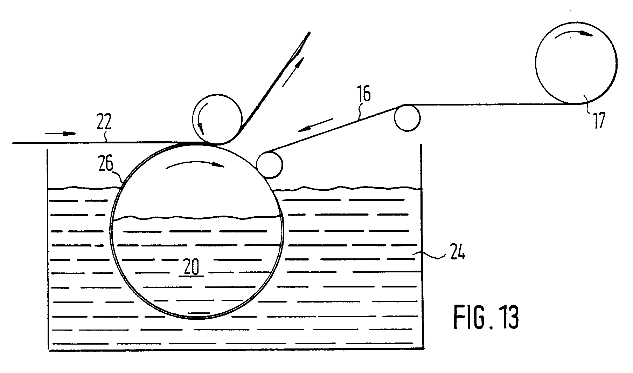

Eine weitere mögliche Variante der Fadeneinbringung zeigt die Fig. 13. In diesem Fall wird das Sicherheitselement 16 bereits vor der Papierherstellung an das Rundsieb angelegt. Diese Möglichkeit eignet sich besonders gut für Fäden, deren Breite im Bereich der Papierfaserlänge oder darunter liegt, da sich zwar auf dem Faden selbst keine Fasern ablagern, aber diejenigen, die sich in der direkten Umgebung des Fadens am Sieb ablagernd den Faden überlappen, so daß sich auf diese Weise beim Verlassen der Pulpe dennoch eine Papierunterlage im Bereich des Fadens gebildet hat.

In einer bevorzugten Ausführungsform wird die Papierbahn zugewandte Seite des Folienbandes 16 mit einer Kleberschicht versehen, wodurch eine stärkere Fixierung der Folie auf der Papieroberfläche erreicht wird. Die Kleberschicht kann sowohl als wasserlöslicher Naßkleber als auch als Heißschmelzkleber ausgeführt sein. Beim Trocknen der Papierbahn wird der Kleber aktiviert und/oder ausgehärtet. Das Element wird damit fest im Papier verankert.

Die Zuführung des Sicherheitselements wird hier aus Gründen der Anschaulichkeit an einer Maschine mit nur einem Rundsieb beschrieben. Es stellt jedoch kein Problem dar, dieses Verfahren auf eine Maschine mit zweilagiger Produktion, d. h. auf eine Doppelrundsieb-Anlage oder auf eine Langsieb-Papiermaschine, zu übertragen. In diesem Fall wird der Faden dem Sieb zugeführt, das den Hauptanteil der Papierdicke produziert bzw. analog dem Langsieb zugeführt.

Nach dem Auflegen des Sicherheitselements auf die Papierschicht läuft dieses in üblicher Weise durch die weiteren Behandlungsstationen in der Papiermaschine. Beim Kalandrieren wird ein eventuell eingelagertes optisch variables Element in der in Fig. 1 gezeigten Art und Weise in die noch weiche Papierschicht eingedrückt, wobei sich die Papierfasern der glatten Oberfläche des Elements anpassen.

Für den Fall, daß nicht ein endloses Band aufgebracht wird, sondern einzelne Elemente, muß nach Verankerung der Elemente im Papier das Transferband wieder abgezogen werden. Dies erfolgt vorzugsweise nach dem Trocknen der Papierbahn, in jedem Fall aber vor der Leimungsstation. Die gleiche Vorgehensweise ist notwendig, wenn Endlosbänder im Transferverfahren aufgebracht werden sollen bzw. dünne Folien mit geringer Eigenstabilität auf der Papieroberfläche zu fixieren sind.

Nach der Qualitätsprüfung ist die Papierbahn fertig für den Druck, sie kann entweder auf einer Aufwickelvorrichtung aufgewickelt und gelagert oder direkt in eine Druckmaschine eingeführt werden.

## Patentansprüche

1. Verfahren zur Herstellung eines Wertpapiers mit eingelagertem Sicherheitselement (12), insbesondere Sicherheitsfaden mit Zeichen oder optisch aktiven Strukturen in Form von Hologrammen, Beugungs- oder Interferenzstrukturen, **gekennzeichnet** durch folgende Schritte:
a) Das Sicherheitselement wird in Form eines endlosen Bandes (16) seitenrichtig auf einer Spule (17) bereitgestellt,
b) am Anfang dieses Bandes (16) wird eine flächenhafte Positionierhilfe (20, 21, 200) befestigt,
c) dieses Band (16) wird mit mechanischen Mitteln (30, 70, 100) an das Sieb der Papiermaschine herangeführt, wobei die mechanischen Mittel (30, 70, 100) derart ausgebildet sind, daß eine Verdrehung des Bandes (16) unter Normalbedingungen unterbleibt,
d) die Positionierhilfe wird gleichmäßig und seitenrichtig an die entstehende Papierbahn angelagert.

2. Verfahren nach Anspruch 1, dadurch **gekennzeichnet,** daß der Anfang des Endlosbandes (16) vor Schritt b) in eine ein räumliches Führungselement (400) durchziehende Öffnung eingeführt wird, die das Band derart umschließt, daß es sich zwar in Laufrichtung bewegen, jedoch nicht verdrehen kann.

3. Verfahren nach Anspruch 2, dadurch **gekennzeichnet,** daß das räumliche Führungselement vor oder während Schritt c) so vor dem Sieb angeordnet wird, daß es beim Wechsel der Spule entfernt werden kann.

4. Verfahren nach einem oder mehreren der Ansprüche 1 - 3, dadurch **gekennzeichnet,** daß die flächenhafte Positionierhilfe (20, 21, 200) ein perforiertes Folienstück oder ein Geflecht ist.

5. Verfahren nach einem oder mehreren der Ansprüche 1 - 4, dadurch **gekennzeichnet,** daß das räumliche Führungselement zylindrisch oder quaderförmig ist.

6. Verfahren nach einem oder mehreren der Ansprüche 1 - 5, dadurch **gekennzeichnet,** daß die mechanischen Mittel (30, 70, 100) eine Düse, eine Stange, ein Transportband oder Transportrollen sind.

7. Verfahren nach den Ansprüchen 5 und 6, dadurch **gekennzeichnet,** daß das räumliche Führungselement (400) und die Düse (30) derart aufeinander abgestimmt sind, daß das Führungselement (400) in der Düse (30) gleiten kann und am Düsenausgang arretiert werden kann.

8. Verfahren nach den Ansprüchen 5 und 6, dadurch **gekennzeichnet,** daß das räumliche Führungselement (400) an der dem Sieb zugewandten Seite der Stange (40) ablösbar verankert ist.

9. Verfahren nach den Ansprüchen 4 und 6, dadurch **gekennzeichnet,** daß die flächenhafte Positionierhilfe (20, 21, 200) am Transportband (100) haftet.

10. Verfahren nach Anspruch 9, dadurch **gekennzeichnet,** daß sowohl das Transportband (100) als auch die flächenhafte Positionierhilfe (20, 21, 200) mit magnetischen Substanzen versehen ist, deren Wechselwirkung für die nötige Haftung während des Transports zum Papiersieb sorgt.

11. Verfahren nach Anspruch 9, dadurch **gekennzeichnet,** daß die flächenhafte Positionierhilfe (20, 21, 200) auf der dem Transportband zugewandten Seite mit einem Haftkleber versehen ist.

12. Verfahren nach einem oder mehreren der Ansprüche 1 - 4, dadurch **gekennzeichnet,** daß das Sicherheitselement mit der flächenhaften Positionierhilfe (20, 21, 200) zwischen zwei in sich geschlossenen Transportbändern (100) zum Sieb transportiert wird.

13. Verfahren nach einem oder mehreren der Ansprüche 1 - 12, dadurch **gekennzeichnet,** daß das Sicherheitselement (16) in einer Rundsiebmaschine zwischen die Filzbahn (22) und die vom Rundsieb ablaufende Papierbahn eingeführt wird.

14. Verfahren nach einem oder mehreren der Ansprüche 1 - 12, dadurch **gekennzeichnet,** daß das Sicherheitselement (16) vor den Kalanderwalzen an die vom Naßfilz abgewandte Seite der Papierbahn angebracht wird.

15. Verfahren nach einem oder mehreren der Ansprüche 1 - 13, dadurch **gekennzeichnet,** daß das Sicherheitselement (16) an einem Punkt dem Sieb zugeführt wird, an dem ein wesentlicher Teil der Papierbildung abgeschlossen ist, insbesondere, nachdem etwa 80 - 90 % der Papierdicke vorliegen.

16. Verfahren nach einem oder mehreren der Ansprüche 1 - 15, dadurch **gekennzeichnet,** daß das Sicherheitselement (16) papierseitig mit einem Klebstoff beschichtet ist.

17. Verfahren nach Anspruch 16, dadurch **gekennzeichnet,** daß der Klebstoff ein wasserlöslicher Naßkleber oder ein Heißschmelzkleber ist.

18. Verfahren nach einem oder mehreren der Ansprüche 1 - 17, dadurch **gekennzeichnet,** daß das Sicherheitselement (16) auf der Spenderrolle mit einer die Klebstoffschicht schützenden Trägerschicht, wie z. B. Silikonpaier, versehen ist, das unmittelbar vor der Berührung der nassen Papierbahn abgezogen wird.

19. Verfahren nach einem oder mehreren der Ansprüche 1 - 17, dadurch **gekennzeichnet,** daß das Sicherheitselement (16) mit Hilfe einer in sich geschlossenen Transportbahn, welche die mit Klebstoff beschichtete Seite abdeckt, an die Papierbahn transportiert wird.

20. Verfahren nach einem oder mehreren der Ansprüche 1 - 17, dadurch **gekennzeichnet,** daß das Sicherheitselement (16) auf der Spenderrolle mit einer schützenden Trägerschicht, z. B. Silikonpapier, versehen ist, das unmittelbar hinter der Spenderrolle abgezogen wird.

21. Verfahren nach einem oder mehreren der Ansprüche 1 - 17, dadurch **gekennzeichnet,** daß der Klebstoff auf der Strecke zwischen Spenderrolle und Sieb auf das Sicherheitselement (16) gebracht wird.

22. Verfahren nach einem oder mehreren der Ansprüche 1 - 21, dadurch **gekennzeichnet,** daß das Sicherheitselement (16) ein optisch variables Element in Form einer Trägerfolie mit einer Hologramm-, Beugungs- oder Interferenzstruktur ist.

23. Verfahren nach einem oder mehreren der Ansprüche 1 - 21, dadurch **gekennzeichnet,** daß das Sicherheitselement (16) aus einem metallisierten Kunststoffaden besteht.

24. Verfahren nach Anspruch 23, dadurch **gekennzeichnet,** daß die Metallbeschichtung Aussparungen in Form von Mustern und/oder Zeichen aufweist.

25. Verfahren nach einem oder mehreren der Ansprüche 1 - 24, dadurch **gekennzeichnet,** daß das Sicherheitselement (16) mindestens ein Breite/Dicke-Verhältnis von etwa 10/1 aufweist.

26. Verfahren nach einem oder mehreren der Ansprüche 1 - 22, dadurch **gekennzeichnet,** daß das Sicherheitselement (16) in Form einzelner Etiketten auf einem endlosen Transferband angeordnet ist.

27. Verfahren nach einem oder mehreren der Ansprüche 1 - 25, dadurch **gekennzeichnet,** daß das Sicherheitselement (16) als Fenstersicherheitsfaden in das Wertpapier eingebracht wird.

28. Verfahren nach einem oder mehreren der Ansprüche 1 - 26, dadurch **gekennzeichnet,** daß das Sicherheitselement ganzflächig an der Oberfläche des Wertpapiers freiliegt.

29. Vorrichtung zur Herstellung eines Wertpapiers mit eingelagertem Sicherheitselement (12), insbesondere Sicherheitsfaden mit Zeichen oder optisch variablen Strukturen in Form von Hologrammen, Beugungs- oder Interferenzstrukturen, **gekennzeichnet** durch:
a) eine Spule (17), auf welcher das Sicherheitselement (12) in Form eines Endlosbandes (16) seitenrichtig vorliegt,
b) mechanische Mittel (30, 70, 100), die das Band an das Papiersieb heranführen und unter Normalbedingungen keine Verdrehung des Bandes zulassen,
c) ein räumliches Führungselement (400), welches eine durchgehende Öffnung aufweist, die in ihren Dimensionen dem Endlosband (16) derart angepaßt ist, daß dieses sich zwar in Laufrichtung frei bewegen, jedoch nicht verdrehen kann.

30. Vorrichtung nach Anspruch 29, dadurch **gekennzeichnet,** daß das räumliche Führungselement (400) zylindrisch oder quaderförmig ist.

31. Vorrichtung nach einem oder mehreren der Ansprüche 29 - 30, dadurch **gekennzeichnet,** daß die mechanischen Mittel (30, 70, 100) eine Düse, eine Stange, ein Transportband oder Transportrollen sind.

32. Vorrichtung nach den Ansprüchen 30 und 31, dadurch **gekennzeichnet,** daß die das Sicherheitselement (16) einblasende Düse (30) ein Paßstück (60) aufweist, welches das räumliche Führungselement (400) lösbar arretiert.

33. Vorrichtung nach den Ansprüchen 30 und 31, dadurch **gekennzeichnet,** daß das räumliche Führungselement (400) an der dem Sieb zugewandten Seite der Stange (70) ablösbar verankert ist.

34. Vorrichtung nach Anspruch 29 oder 30, dadurch **gekennzeichnet,** daß die mechanischen Mittel zwei in sich geschlossene Transportbänder (100) sind, die so angeordnet sind, daß das Endlosband (16) zwischen diesen Transportbändern an das Sieb transportiert wird.

## Claims

1. A method for producing a paper of value having an embedded security element (12), in particular safeguarding thread with characters or optically active structures in the form of holograms, diffraction structures or interference structures, characterized by the following steps:
(a) providing the security element true to side on a reel (17) in the form of an endless band (16),
(b) fastening a flat positioning aid (20, 21, 200) to the beginning of said band (16),
(c) feeding said band (16) to the wire of the paper machine by mechanical means (30, 70, 100), the mechanical means (30, 70, 100) being designed in such a way that the band (16) cannot twist under normal conditions,
(d) depositing the positioning aid on the developing paper web uniformly and true to side.

2. The method of claim 1, characterized in that the beginning of the endless band (16) is introduced before step b) into an opening running through a three-dimensional guide element (400) which encloses the band in such a way that it can move in the running direction but not twist.

3. The method of claim 2, characterized in that the three-dimensional guide element is disposed before the wire before or during step c) in such a way that it can be removed upon a change of the reel.

4. The method of one or more of claims 1 to 3, characterized in that the flat positioning aid (20, 21, 200) is a perforated piece of film or a mesh.

5. The method of one or more of claims 1 to 4, characterized in that the three-dimensional guide element has a cylindrical or right parallelepiped shape.

6. The method of one or more of claims 1 to 5, characterized in that the mechanical means (30, 70, 100) are a nozzle, a rod, a transport band or transport rolls.

7. The method of claims 5 and 6, characterized in that the three-dimensional guide element (400) and the nozzle (30) are coordinated with each other in such a way that the guide element (400) can slide within the nozzle (30) and can be locked at the nozzle exit.

8. The method of claims 5 and 6, characterized in that the three-dimensional guide element (400) is anchored detachably on the side of the rod (40) facing the wire.

9. The method of claims 4 and 6, characterized in that the flat positioning aid (20, 21, 200) adheres to the transport band (100).

10. The method of claim 9, characterized in that both the transport band (100) and the flat positioning aid (20, 21, 200) are provided with magnetic substances whose interaction ensures the necessary adhesion during transport to the wire.

11. The method of claim 9, characterized in that the flat positioning aid (20, 21, 200) is provided with a contact adhesive on the side facing the transport band.

12. The method of one or more of claims 1 to 4, characterized in that the security element with the flat positioning aid (20, 21, 200) is transported to the wire between two closed-loop transport bands (100).

13. The method of one or more of claims 1 to 12, characterized in that the security element (16) is introduced in a cylinder machine between the felt web (22) and the paper web running off the forming vat.

14. The method of one of claims 1 to 12, characterized in that the security element (16) is applied to the side of the paper web facing away from the wet felt before the calender rolls.

15. The method of one or more of claims 1 to 13, characterized in that the security element (16) is fed to the wire at a point at which a substantial part of the paper formation is concluded, in particular after about 80 to 90% of the paper thickness exists.

16. The method of one or more of claims 1 to 15, characterized in that the security element (16) is coated on the paper side with an adhesive.

17. The method of claim 16, characterized in that the adhesive is a water-soluble wet adhesive or a hot-melt adhesive.

18. The method of one or more of claims 1 to 17, characterized in that the security element (16) is provided on the dispensing reel with a carrier layer protecting the adhesive layer, e.g. silicone paper, which is removed directly before contact with the wet paper web.

19. The method of one or more of claims 1 to 17, characterized in that the security element (16) is transported to the paper web with the aid of a closed-loop transport path which covers the side coated with adhesive.

20. The method of one or more of claims 1 to 17, characterized in that the security element (16) is provided on the dispensing reel with a protective carrier layer, e.g. silicone paper, which is removed directly after the dispensing reel.

21. The method of one or more of claims 1 to 17, characterized in that the adhesive is applied to the security element (16) on the path between dispensing reel and wire.

22. The method of one or more of claims 1 to 21, characterized in that the security element (16) is an optically variable element in the form of a carrier film with a hologram structure, diffraction structure or interference structure.

23. The method of one or more of claims 1 to 21, characterized in that the security element (16) is made of a metalized synthetic thread.

24. The method of claim 23, characterized in that the metal coating has gaps in the form of patterns and/or characters.

25. The method of one or more of claims 1 to 24, characterized in that the security element (16) has a width-to-thickness ratio of at least about 10:1.

26. The method of one or more of claims 1 to 22, characterized in that the security element (16) is disposed on an endless transfer band in the form of individual labels.

27. The method of one or more of claims 1 to 25, characterized in that the security element (16) is incorporated in the paper of value as a window safeguarding thread.

28. The method of one or more of claims 1 to 26, characterized in that the security element is completely exposed on the surface of the paper of value.

29. An apparatus for producing a paper of value having an embedded security element (12), in particular safeguarding thread with characters or optically variable structures in the form of holograms, diffraction structures or interference structures, characterized by:
a) a reel (17) on which the security element (12) is present true to side in the form of an endless band (16),
b) mechanical means (30, 70, 100) for feeding the band to the wire and permitting no twisting of the band under normal conditions,
c) a three-dimensional guide element (400) which has a through-going opening whose dimensions are adapted to the endless band (16) in such a way that the latter can move freely in the running direction but not twist.

30. The apparatus of claim 29, characterized in that the three-dimensional guide element (400) has a cylindrical or right parallelepiped shape.

31. The apparatus of one or both of claims 29 to 30, characterized in that the mechanical means (30, 70, 100) are a nozzle, a rod, a transport band or transport rolls.

32. The apparatus of claims 30 and 31, characterized in that the nozzle (30) blowing in the security element (16) has a fitting piece (60) which detachably locks the three-dimensional guide element (400).

33. The apparatus of claims 30 and 31, characterized in that the three-dimensional guide element (400) is detachably anchored on the side of the rod (70) facing the wire.

34. The apparatus of claim 29 or 30, characterized in that the mechanical means are two closed-loop transport bands (100) disposed in such a way that the endless band (16) is transported to the wire between these transport bands.

## Revendications

1. Procédé de fabrication de papier-monnaie ou valeur mobilière incorporant un élément de sécurité (12), en particulier un fil de sécurité avec des symboles ou des structures optiquement actives en forme de hologrammes, des structures à diffraction ou à interférence, caractérisé par les étapes consistant à:
a) préparer l'élément de sécurité en forme d'une bande sans fin (16) à l'endroit sur une bobine (17),
b) fixer une aide au positionnement bidimensionnel (20, 200) au début de cette bande (16),
c) guider cette bande (16) par des moyens mécaniques (30, 70, 100) à la toile métallique de la machine à papier, les moyens mécaniques (30, 70, 100) étant réalisé en sorte que, en conditions normales, une torsion de la bande (16) soit exclue,
d) déposer l'aide au positionnement uniformément et du bon côté sur la feuille continue de papier en formation.

2. Procédé selon la revendication 1, caractérisé en ce que le début de la bande sans fin (16) est guidée, avant l'étape b) dans une ouverture traversant un élément de guidage spatial (400) qui entoure la bande de telle façon qu'elle peut se déplacer dans la direction de coulée, sans toutefois se tordre.

3. Procédé selon la revendication 2, caractérisé en ce que l'élément de guidage spatial est disposé, avant ou pendant l'étape c) avant la toile métallique, de sorte qu'il puisse être éloigné lors d'un changement de bobine.

4. Procédé selon une ou plusieurs des revendications 1 à 3, caractérisé en ce que l'aide au positionnement bidimensionnel est un morceau d'une feuille perforée ou un tissage.

5. Procédé selon une ou plusieurs des revendications 1 à 4, caractérisé en ce que l'élément de guidage spatial est de forme cylindrique ou parallèlipipédique.

6. Procédé selon une ou plusieurs des revendications 1 à 5, caractérisé en ce que les moyens mécaniques (30, 70, 100) sont une buse, une barre, une bande transporteuse ou des rouleaux de transport.

7. Procédé selon les revendications 5 et 6, caractérisé en ce que l'élément de guidage spatial 400 et la buse (30) sont adaptés l'un à l'autre de façon à permettre à l'élément de guidage (400) de glisser dans la buse (30) et d'être arrêté à la sortie de la buse.

8. Procédé selon les revendications 5 et 6, caractérisé en ce que l'élément de guidage spatial (400) est fixé de façon amovible sur le côté de la barre (40), faisant face à la toile métallique.

9. Procédé selon les revendications 4 et 6, caractérisé en ce que l'aide au positionnement bidimensionnel (20, 200) adhère à la bande transporteuse (100).

10. Procédé selon la revendication 9, caractérisé en ce que la bande transporteuse (100), comme aussi l'aide au positionnement bidimensionnel (20, 200) sont munies de substances magnétiques dont l'action mutuelle garantit l'adhésion nécessaire pendant son transport vers la toile métallique de la machine à papier.

11. Procédé selon la revendication 9, caractérisé en ce que l'aide au positionnement bidimensionnel (20, 200) est munie d'un adhésif sur sa face faisant front à la bande transporteuse.

12. Procédé selon une ou plusieurs des revendications 1 à 4, caractérisé en ce que l'élément de sécurité est transporté, avec l'aide au positionnement bidimensionnel (20, 200) jusqu'à la toile métallique entre deux bandes transporteuses qui sont fermées entre elles.

13. Procédé selon une ou plusieurs des revendications 1 à 12, caractérisé en ce que l'élément de sécurité (16) est guidé, dans une machine à toile métallique ronde, entre le trajet du feutre (22) et la feuille continue de papier quittant la forme ronde.

14. Procédé selon une ou plusieurs des revendications 1 à 12, caractérisé en ce que l'élément de sécurité (16) est appliqué, avant les rouleaux de calandre, à la feuille continue de papier du côté opposé au feutre humide.

15. Procédé selon une ou plusieurs des revendications 1 à 13, caractérisé en ce que l'élément de sécurité (16) est guidé jusqu'à un point de la toile métallique où une part importante de la formation du papier est terminée, en particulier après que le papier ait entre 80 et 90% de son épaisseur.

16. Procédé selon une ou plusieurs des revendications 1 à 15, caractérisé en ce que l'élément de sécurité (16) est revêtu d'un adhésif du côté du papier.

17. Procédé selon la revendication 16, caractérisé en ce que l'adhésif est un adhésif par voie humide ou une colle thermofusible.

18. Procédé selon une ou plusieurs des revendications 1 à 17, caractérisé en ce que l'élément de sécurité (16) est pourvu d'un rouleau d'alimentation avec une feuille de support, par exemple du papier siliconé pour protéger la couche adhésive et qui est retiré directement avant son contact avec la feuille continue humide de papier.

19. Procédé selon une ou plusieurs des revendications 1 à 17, caractérisé en ce que l'élément de sécurité 16 est transporté jusque la feuille continue de papier au moyen de chemin fermé en soi pour le transport et qui recouvre la face revêtue d'adhésif.

20. Procédé selon une ou plusieurs des revendications 1 à 17, caractérisé en ce que l'élément de sécurité (16) est muni, sur le rouleau d'alimentation, d'une feuille de support et de protection telle que, par exemple, du papier siliconé, qui est retiré directement derrière le rouleau d'alimentation.

21. Procédé selon une ou plusieurs des revendications 1 0 17, caractérisé en ce que l'adhésif est appliqué à l'élément de sécurité (16) sur le trajet entre le rouleau d'alimentation et la toile métallique.

22. Procédé selon une ou plusieurs des revendications 1 à 21, caractérisé en ce que l'élément de sécurité (16) est un élément variable optiquement, en forme d'une feuille de support munie d'une structure à hologramme, à diffraction ou à interférence.

23. Procédé selon une ou plusieurs des revendications 1 à 21, caractérisé en ce que l'élément de sécurité (16) est composé d'un fil en matière synthétique métallisé.

24. Procédé selon la revendication 23, caractérisé en ce que le revêtement métallique présente des évidements en forme de modèles et/ou de dessins.

25. Procédé selon une plusieurs des revendications 1 à 24, caractérisé en ce que l'élément de sécurité (16) présente au moins un rapport largeur/épaisseur d'environ 10/1.

26. Procédé selon une ou plusieurs des revendications 1 à 22, caractérisé en ce que l'élément de sécurité (16) est disposé en forme d'étiquettes individuelles sur une bande de transport sans fin.

27. Procédé selon une ou plusieurs des revendications 1 à 25, caractérisé en ce que l'élément de sécurité (16) est introduit dans le papier-valeur sous forme de fil de sécurité pour fenêtre pratiquée dans du papier.

28. Procédé selon une ou plusieurs des revendications 1 à 26, caractérisé en ce que l'élément de sécurité est disposé librement et superficiellement sur le papier-valeur.

29. Procédé de fabrication d'un papier-valeur incorporant un élément de sécurité (12), en particulier un fil de sécurité avec des symboles ou des structures optiquement actives en forme de hologrammes, des structures de diffraction ou d'interférence, caractérisé par:
a) une bobine (17), sur laquelle l'élément de sécurité (12) en forme d'une bande sans fin (16) est située à l'endroit,
b) Des moyens mécaniques (30, 70, 100) pour guider la bande jusqu'à la toile métallique de la machine à papier et qui, en conditions normales, ne permettent aucune torsion de la bande,
c) un élément de guidage spatial (400) présentant une ouverture traversant dont les dimensions sont adaptées à la bande sans fin (16) de sorte que cette dernière peut se déplacer librement dans sa direction d'avancement, mais ne peut pas se gauchir ou se tordre.

30. Dispositif selon la revendication 29, caractérisé en ce que l'élément de guidage spatial (400) est de forme cylindrique ou parallèlipipédique.

31. Dispositif selon une ou plusieurs des revendications 29 à 30, caractérisé en ce que les moyens mécaniques (30, 70, 100) sont une buse, une barre, une bande transporteuse ou des rouleaux de transport.

32. Dispositif selon les revendications 30 et 31, caractérisé en ce que la buse (30) destinée à insuffler l'élément de sécurité (16) présente une partie d'adaptation (60) destinée à bloquer de façon amovible l'élément de guidage spatial (400).

33. Dispositif selon les revendications 30 et 31, caractérisé en ce que l'élément de guidage spatial 400 est fixé de façon amovible sur le côté de la barre 70, faisant face à la toile métallique.

34. Dispositif selon la revendication 29 ou 30, caractérisé en ce que les moyens mécaniques sont deux bandes transporteuses (100) refermées l'une dans l'autre qui sont disposées de sorte que la bande sans fin (16) soit transportée à la toile métallique entre les bandes de transport.
